# EUROPÄISCHE PATENTSCHRIFT

(11) **EP 2 746 821 B1**
(45) Veröffentlichungstag und Bekanntmachung des Hinweises auf die Patenterteilung: **19.04.2017**
(21) Anmeldenummer: 12198346.4
(22) Anmeldetag: 20.12.2012
(51) Int. Cl.: G01V 8/22

(54) **Optischer Sensor**
Optical sensor
Capteur optique

(43) Veröffentlichungstag der Anmeldung: 25.06.2014
(73) Patentinhaber: Leuze electronic GmbH + Co KG, 73277 Owen/Teck (DE)
(72) Erfinder: Lohmann Dr., Lutz, 82140 Olching (DE)
(74) Vertreter: Ruckh, Rainer Gerhard

(56) Entgegenhaltungen:
- EP-A1- 1 512 992
- EP-A2- 1 168 269
- EP-A2- 1 798 577
- DE-U1-202006 008 112

## Beschreibung

Die Erfindung betrifft einen optischen Sensor zur Erfassung von Objekten innerhalb eines Schutzfelds.

Derartige optische Sensoren können typischerweise als Lichtvorhänge ausgebildet sein, die nach dem Reflexionslichtschrankenprinzip arbeiten. Diese Lichtvorhänge weisen als aktive Sensorelemente an einen ersten Rand des Schutzfelds angeordnete Sender-/Empfängerpaare auf, die mit einer Auswerteeinheit in einem gemeinsamen Gehäuse integriert sind. Jedes Sender-/Empfängerpaar umfasst einen Sender als punktförmige Lichtquelle, welcher Lichtstrahlen emittiert. Der Sender ist von einer Leuchtdiode oder dergleichen gebildet. Der Lichtstrahlen empfangende Empfänger des Sender-/Empfängerpaares besteht aus einer Photodiode. An einem dem ersten Rand gegenüberliegenden Rand des Schutzfelds befindet sich ein Retroreflektor. Bei freiem Schutzfeld werden die von den Sendern emittierenden Lichtstrahlen mit vorzugsweise parallel in Abstand zueinander laufenden Strahlachsen zum Retroreflektor geführt, dort in sich selbst zurückreflektiert und dann zum Empfänger des jeweiligen Streitpatents geführt. Die dadurch generierten Empfangssignale der Empfänger werden in der Auswerteeinheit zur Generierung eines Objektfeststellungssignals ausgewertet. Ein in das Schutzfeld eindringendes Objekt wird dadurch erkannt, dass das Objekt den Retroreflektor abschattet, so dass zumindest die Lichtstrahlen eines Senders nicht mehr zum Retroreflektor gelangen sondern vom Objekt zum Empfänger des Sender-/Empfängerpaares zurückreflektiert werden. Die sich dadurch gegenüber einem freien Strahlengang ergebende Amplitudenänderung des Empfängersignals des Empfängers wird in der Auswerteeinheit erfasst.

Typischerweise werden derartige Lichtvorhänge im Bereich der Sicherheitstechnik, beispielsweise für den Personenschutz an gefahrenbringenden Anlagen eingesetzt. Zur Erzielung des hierfür erforderlichen Sicherheitsniveaus weist die Auswerteeinheit einen mehrkanaligen Aufbau, beispielsweise in Form zweier sich zyklisch gegenseitig überwachender Rechnereinheiten auf.

Eine in der Sicherheitsnorm IEC 61496-2 definierte Anforderung ist die sichere Unterscheidung des Retroreflektors von Objekten. Zur Erfüllung dieser Anforderung ist es möglich den Abstand des Retroreflektors zu den einzelnen Sender-/Empfängerpaaren zu überwachen. Diese Abstandskontrolle erfordert einen beträchtlichen Hardwareaufwand und führt somit zu unerwünscht hohen Herstellkosten des Lichtvorhangs.

Ein weiterer Nachteil derartiger Lichtvorhänge besteht darin, dass die Erfassung von kleinen Objekten problematisch sein kann, da die Sender-/Empfängerpaare diskrete, in Abstand zueinander angeordnete Sensorelemente bilden, ist die Auflösung des Lichtvorhangs durch diese Abstände begrenzt. Die Abstände der Sender-/Empfängerpaare können zwar bis zu einem gewissen Grad verringert werden, in dem eine besonders hohe Anzahl von Sender-/Empfängerpaaren vorgesehen wird. Eine derartig hohe Anzahl von Sender-/Empfängerpaaren führt jedoch wieder zu einer Erhöhung der Herstellkosten des Lichtvorhangs.

Die EP 1 798 577 A2 betrifft ein Verfahren zur Detektion eines Gegenstandes, bei dem Licht von einem Sender in Richtung eines Reflektors ausgesandt wird. Das ausgesandte Licht wird an dem Reflektor reflektiert und als Reflektorbild auf einen Detektionsbereich eines mindestens eindimensional ortsauflösenden Empfängers abgebildet und von diesem erfasst. Das erfasste Reflektorbild wird ausgewertet und es wird ein Gegenstanderfassungssignal erzeugt, wenn aufgrund der Auswertung des erfassten Reflektorbildes eine zumindest teilweise Unterbrechung des ausgesandten Lichts erkannt wird. Ein außerhalb des Detektionsbereichs auf den Empfänger auftreffendes Lichtobjekt wird von diesem erfasst, auf vorgegebene Objekteigenschaften untersucht und anhand der ermittelten Objekteigenschaften als Reflektorbild oder als Störlichtobjekt klassifiziert. Im Falle einer Klassifizierung als Störlichtobjekt wird eine Bewegung des Störlichtobjekts auf dem Empfänger ermittelt und die Erzeugung des Gegenstanderfassungssignals in Abhängigkeit von der ermittelten Bewegung des Störlichtobjekts durchgeführt.

Die EP 1 168 269 A1 betrifft eine optoelektronische Schutzeinrichtung mit zumindest einer Kamera zur Aufnahme von Bildern eines Schutzbereiches, einer dieser zugeordneten Auswerteeinheit zur Verarbeitung der aufgenommenen Bilder und zur Auslösung einer Reaktion in Abhängigkeit von einem detektierten Ereignis zumindest einer der Kamera zugeordneten, bevorzugt im Kameragehäuse vorgesehenen Strahlungsquelle sowie zumindest einem den Schutzbereich begrenzenden Reflektor, der durch Segmente codiert ist, die Strahlung zumindest eines definierten Wellenlängenbereiches reflektieren beziehungsweise nicht reflektieren.

Der Erfindung liegt die Aufgabe zugrunde, einen optischen Sensor der eingangs genannten Art bereitzustellen, mittels dessen bei geringem konstruktiven Aufwand eine sichere und umfassende Objekterfassung innerhalb eines Schutzfelds ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen optischen Sensor zur Erfassung von Objekten innerhalb eines Schutzfelds mit einer eine Lichtlinie erzeugenden Beleuchtungseinheit, sowie wenigstens einer der Beleuchtungseinheit zugeordneten, einen Empfänger bildenden Kamera an einem ersten Rand des Schutzfelds, und einem an einem zweiten Rand des Schutzfelds angeordneten Reflektor. Mit einer Auswerteeinheit wird in Abhängigkeit von Empfangssignalen der wenigstens einer Kamera ein Objektfeststellungssignal generiert. Der Reflektor weist ein Reflektormuster aus spiegelnd reflektierenden Segmenten und lichtabsorbierenden Segmenten auf. Bei freiem Schutzfeld trifft die Lichtlinie der Beleuchtungseinheit auf das Reflektormuster des Reflektors. Von den spiegelnd reflektierenden Segmenten wird das Licht der Lichtline zur wenigstens einen Kamera geführt. Die wenigstens eine Kamera weist mindestens einen Teil des Schutzfelds abdeckenden Sichtbereich auf. Ein reflektierendes Objekt innerhalb des Sichtbereichs wird dadurch erfasst, dass an diesem reflektiertes Licht der Beleuchtungseinheit direkt auf die mindestens eine Kamera geführt ist. Ein nicht reflektierendes Objekt wird innerhalb des Sichtbereichs dadurch erfasst, dass dieses die Lichtlinie der Beleuchtungseinheit unterbricht, so dass nicht mehr von allen spiegelnden reflektierenden Segmenten des Reflektors Licht zur mindestens einen Kamera geführt wird. Ein reflektierendes oder nicht reflektierendes Objekt, das außerhalb des Sichtbereichs jedoch innerhalb des Schutzfelds angeordnet ist, wird dadurch erfasst, dass dieses die Lichtline der Beleuchtungseinheit unterbricht, so dass nicht mehr von allen spiegelnd reflektierenden Segmenten des Reflektors Licht zur mindestens einen Kamera geführt wird.

Durch die flächige Ausleuchtung des Schutzfelds mit der von der Beleuchtungseinheit generierten Lichtlinie und die Abbildung der spiegelnden Segmente des Reflektors durch diese Lichtlinie auf den von wenigstens einer Kamera gebildeten Empfänger wird eine sichere Objekterfassung innerhalb des gesamten Schutzfelds erzielt.

Wesentlich hierbei ist, dass eine Objektdetektion nicht nur innerhalb sondern auch außerhalb des Sichtfelds der wenigstens einen Kamera ermöglicht wird. Dadurch reicht im einfachsten Fall bereits eine einzige, vorzugsweise im Bereich des Zentrums der Beleuchtungseinheit positionierte Kamera zur Objekterfassung aus. Vorteilhaft können auch zwei Kameras aus den längsseitigen Enden der Beleuchtungseinheit, das heißt in den Ecken des Schutzfelds positionierte Kameras zur Objektdetektion vorgesehen sein.

In jedem Fall reicht eine geringe Anzahl aktiver Sensorkomponenten zur Objekterfassung innerhalb des gesamten Schutzfelds aus.

Das Prinzip der Objekterkennung beruht dabei allgemein darauf, dass in der Auswerteeinheit geprüft wird, ob das Reflektormuster vollständig erkannt wird oder nicht. Dabei liegt ein freies Schutzfeld vor, wenn das Reflektormuster des Reflektors in der Auswerteeinheit vollständig erkannt wird und ein Objekteingriff im Schutzfeld vor, wenn das Reflektormuster in der Auswerteeinheit nicht erkannt wird.

Vorteilhaft wird bei freiem Schutzfeld das auf den Empfänger abgebildete Reflektormuster des Reflektors in einem Einlernvorgang ein Referenzbild beziehungsweise hiervon abgeleitete Referenzmerkmale eingelernt, welche von den auf den Reflektor abgebildeten reflektierenden Segmenten des Reflektors gebildet ist. Während eines auf den Einlernvorgang folgenden Arbeitsbetriebs zur Objekterfassung werden aktuelle Bilder des Empfängers mit dem Referenzbild verglichen.

Bei der Objekterkennung von Objekten innerhalb des Sichtbereichs der wenigstens einen Kamera wird unterschieden, ob es sich um reflektierende oder nicht reflektierende Objekte handelt.

Reflektierende Objekte werden dadurch erfasst, in dem das von diesen Objekten reflektierte Licht der Beleuchtungseinheit, welches auf die wenigstens eine Kamera geführt wird, ausgewertet wird.

Die Objektdetektion von nicht reflektierenden Objekten erfolgt dadurch, dass diese das Licht der Beleuchtungseinheit unterbrechen, was in der wenigstens einen Kamera dadurch registriert wird, dass nicht mehr von allen spiegelnd reflektierenden Segmenten des Reflektors Licht auf die wenigstens eine Kamera geführt wird.

Die Objektdetektion von Objekten innerhalb des Schutzfelds, jedoch außerhalb des Sichtfelds erfolgt unabhängig davon, ob diese Objekte reflektierend sind oder nicht, dadurch, dass durch die Unterbrechung der Lichtlinie durch das Objekt nicht mehr von allen spiegelnd reflektierenden Segmenten des Reflektors Licht auf die wenigstens eine Kamera geführt wird.

Eine besonders vorteilhafte Geometrie des optischen Sensors ist dabei dadurch gegeben, dass die eine Lichtlinie generierende Beleuchtungseinheit und der Reflektor ein rechteckiges Schutzfeld begrenzen.

Besonders vorteilhaft weist der Reflektor eine Spiegelfläche auf, welche an vorgegebenen Positionen zur Generierung des Reflektormusters lichtabsorbierende Beschichtungen oder Aussparungen aufweist.

Die nicht spiegelnden, stark lichtabsorbierenden Segmente können durch verschiedenartige Beschichtungsverfahren, insbesondere auch durch Aufkleben derartiger Segmente auf einer Spiegelfläche des Reflektors aufgebracht werden. Die lichtabsorbierenden Aussparungen einer Spiegelfläche können durch Fräsen oder sonstige mechanische Bearbeitungsvorgänge hergestellt werden.

Der Reflektor kann selbst aus einem starren Material bestehen. Alternativ kann der Reflektor einen flexiblen, biegsamen Körper bilden, der auf einem starren Grundkörper fixiert wird. Allgemein kann der Reflektor in einem Reflektorgehäuse integriert sein.

Ein wesentlicher Vorteil der Erfindung besteht darin, dass auch für den Einsatz des optischen Sensors in sicherheitstechnischen Anwendungen die Reflektorposition nicht mehr bestimmt oder überwacht werden muss. Vielmehr ist es ausreichend, dass das Reflektormuster in der wenigstens einen Kamera korrekt erkannt wird, wobei das Reflektormusters in der Auswerteeinheit ortsaufgelöst ausgewertet wird.

Die Kamera besteht weist hierzu vorteilhaft eine matrixförmige Anordnung von Empfangselementen auf.

Dabei kann die Kamera als Mono- oder Multispektralkamera, das heißt als Farbkamera ausgebildet sein.

Vorteilhaft erfolgt im Empfänger eine Mehrzeilenauswertung zur Erfassung des Reflektormusters. Vorteilhaft weist dann der Reflektor ein mehrzeiliges Reflektormuster auf. Durch die Mehrzeilenauswertung wird eine genauere Ortsinformation für das Reflektormuster erhalten und dementsprechend eine genauere Ortsinformation bei der Objektdetektion. Bei gleicher Kameraausführung können somit kleinere Objekte erfasst werden.

Gemäß einer vorteilhaften Ausgestaltung der Erfindung erzeugt die Beleuchtungseinheit des optischen Sensors eine kontinuierliche, unterbrochene Lichtlinie. Alternativ kann mit der Beleuchtungseinheit auch eine komplexere Lichtlinie derart erzeugt werden, dass viele aneinander gereihte Muster die Lichtline bilden.

Gemäß einer ersten vorteilhaften Ausgestaltung weist die Beleuchtungseinheit wenigstens einen Lichtstrahlen emittierenden Sender und einen Lichtstab, in welchen die Lichtstrahlen eingekoppelt werden, auf. Im Lichtstab geführte Lichtstrahlen werden über seitliche Auskoppelflächen des Lichtstabs zur Generierung der Lichtlinie ausgekoppelt.

Die Auskoppelflächen können besonders einfach in Form von Einkerbungen oder Aufrauungen im Lichtstab erzeugt werden.

Gemäß einer zweiten vorteilhaften Ausgestaltung weist die Beleuchtungseinheit wenigstens einen Lichtstrahlen emittierenden Sender und eine diesem nachgeordnete Sendeoptik auf, mittels derer aus den Lichtstrahlen die Lichtlinie geformt wird.

Bei beiden Ausführungsformen können den Sendern optische Muster zugeordnet sein, die die Lichtmuster der Lichtlinie erzeugen.

Die Sender der Beleuchtungseinheit können generell sichtbares Licht oder unsichtbares Licht, insbesondere Infrarotlicht emittieren.

Generell können die Beleuchtungseinheit und die Kamera beziehungsweise die Kameras separate Einheiten bilden. Alternativ können diese auch zu einer Geräteeinheit zusammengefasst sein.

Gemäß einer besonders vorteilhaften Ausgestaltung der Erfindung ist der optische Sensor ein Sicherheitssensor, dessen Auswerteeinheit und/oder dessen Empfänger einen mehrkanaligen Aufbau aufweist.

Der so ausgebildete Sicherheitssensor kann dann im Bereich der Sicherheitstechnik, insbesondere für den Personenschutz von gefahrbringenden Maschinen und Anlagen eingesetzt werden.

Durch einen mehrkanaligen Aufbau des Empfängers können die SicherheitsAnforderungen an die durchgeführten Überwachungen erfüllt werden. Generell umfasst ein mehrkanaliger Empfänger wenigstens zwei Kameras, die denselben Sichtbereich überwachen. Dies kann beispielsweise durch optische Umlenkmittel realisiert werden, die den Kameras vorgeordnet sind. Die mit den Kameras aufgenommenen Bilder oder Merkmale desselben Sichtbereichs werden dann zur Aufdeckung von Fehlern des Sicherheitssensors fortlaufend miteinander verglichen.

Besonders vorteilhaft sind Mittel zur Testung der wenigstens einen Kamera vorgesehen.

Dadurch wird die Fehlersicherheit des optischen Sensors weiter erhöht, was insbesondere bei der Ausbildung des optischen Sensors als Sicherheitssensor vorteilhaft ist.

Vorteilhaft werden zur Testung der wenigstens einer Kamera mit dieser aufgenommene Bilder bei ausgeschalteten Sendern oder bei Projektion eines Lichtmusters in den Sichtbereich der Kamera oder bei Erzeugung eines der Lichtlinie aufgeprägten, sich zeitlich ändernden Testmusters in der Auswerteeinheit ausgewertet.

In jedem Fall werden die bei der Testung ermittelten Bilder oder Merkmale mit bestimmten Sollwerten, die Erwartungswerte für den fehlerfreien Fall definieren, verglichen, um so die Funktion der jeweiligen Kamera zu testen.

Gemäß einer weiteren vorteilhaften Ausführungsform weist der optische Sensor Mittel zur Unterdrückung von Störlichteinstrahlungen auf.

Gemäß einer ersten Variante können Störlichteinflüsse dadurch unterdrückt werden, dass ein Kamerabild zunächst bei ausgeschalteter Beleuchtungseinheit aufgenommen wird, wobei im Anschluss daran ein Kamerabild bei eingeschalteter Beleuchtungseinheit aufgenommen wird und dann die Differenz beider Kamerabilder gebildet wird.

Eine weitere Möglichkeit der Störlichtunterdrückung besteht darin, dass das Licht der Beleuchtungseinheit moduliert oder getaktet wird und der Empfänger darauf synchronisiert wird.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Erste Variante einer Beleuchtungseinheit für den optischen Sensor gemäß Figur 1.
- Figur 3:: Zweite Variante einer Beleuchtungseinheit für den optischen Sensor gemäß Figur 1.
- Figur 4:: Einzeldarstellung des Reflektors des optischen Sensors gemäß Figur 1.
- Figur 5:: Variante des Reflektors gemäß Figur 4.
- Figur 6a)-c):: Kamerabilder bei unterschiedlichen Objektdetektionen mit dem optischen Sensor gemäß Figur 1.
- Figur 7:: Zweites Ausführungsbeispiel des erfindungsgemäßen optischen Sensors.
- Figur 8:: Variante der Ausführungsform gemäß Figur 7.
- Figur 9:: Ausführungsform gemäß Figur 7 mit Mitteln zur Testung der Kamera.
- Figur 10:: Variante der Mittel zur Testung einer Kamera des optischer Sensors.

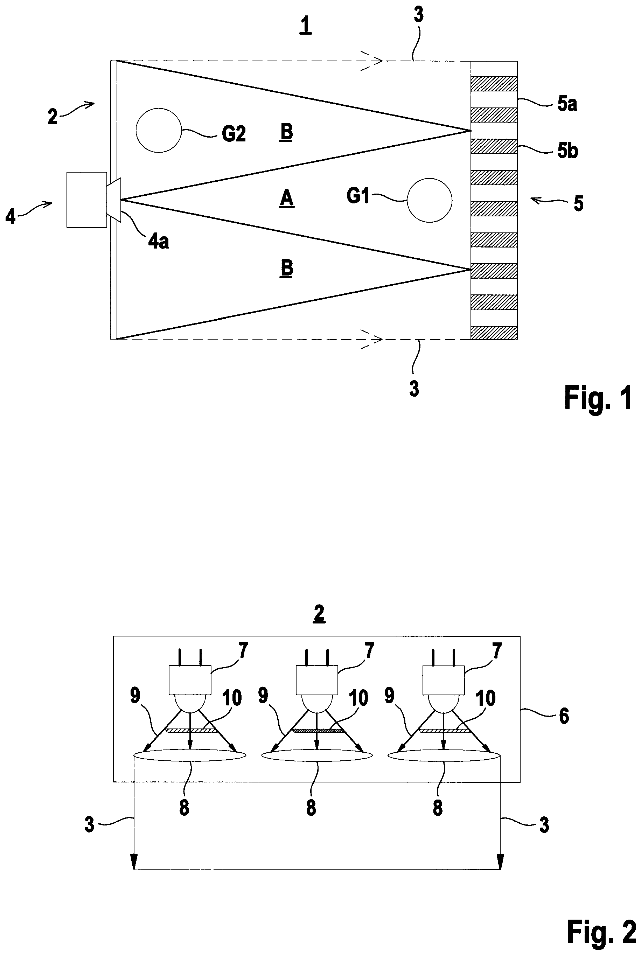

Figur 1 zeigt ein erstes Ausführungsbeispiel des erfindungsgemäßen optischen Sensors 1. Der optische Sensor 1 umfasst als aktive Sensorkomponente eine Beleuchtungseinheit 2, die eine Lichtlinie 3 erzeugt und eine Kamera 4. Diesen Sensorkomponenten ist eine nicht dargestellte Auswerteeinheit zugeordnet. Diese Einheiten bilden vorteilhaft eine Geräteeinheit, die beispielsweise in einem nicht dargestellten Gehäuse integriert ist. Die aktiven Sensorkomponenten befinden sich an einem ersten Rand eines Schutzfelds, innerhalb dessen mit dem optischen Sensor 1 Objekte erfasst werden können. Am gegenüberliegenden Rand des Schutzfelds befindet sich ein Reflektor 5.

Der optische Sensor 1 bildet im vorliegenden Fall einen Sicherheitssensor. Zur Erfüllung der Sicherheitsanforderungen für den Einsatz des Sicherheitssensors im Bereich der Sicherheitstechnik weist die Auswerteeinheit einen mehrkanaligen, redundanten Aufbau auf. Im vorliegenden Fall besteht die Auswerteeinheit aus zwei sich gegenseitig zyklisch überwachenden Rechnereinheiten.

Die Kamera 4 besteht aus einer matrixförmigen Anordnung von lichtempfindlichen Empfangselementen. Die Kameras können als Mono- oder Multispektralkameras ausgebildet sein. In jedem Fall weist die Kamera 4 eine matrixförmige Anordnung von lichtempfindlichen Empfangselementen auf. Im vorliegenden Fall besteht die Kamera 4 aus einer CCD- oder CMOS Kamera 4.

Die Empfangssignale an den Ausgängen der Empfangssignale werden in der Auswerteeinheit zur Generierung eines Objektfeststellungssignals ausgewertet. Im vorliegenden Fall ist das Objektfeststellungssignal von einem binären Schaltsignal gebildet, dessen Schaltzustände angeben, ob sich ein Objekt im Schutzfeld befindet oder nicht. Mit dem Schaltsignal wird eine mit dem optischen Sensor zu überwachende gefahrbringende Anlage gesteuert. Wird mit dem optischen Sensor im Schutzfeld ein Objekt detektiert, wird durch das entsprechende Schaltsignal die Anlage abgeschaltet.

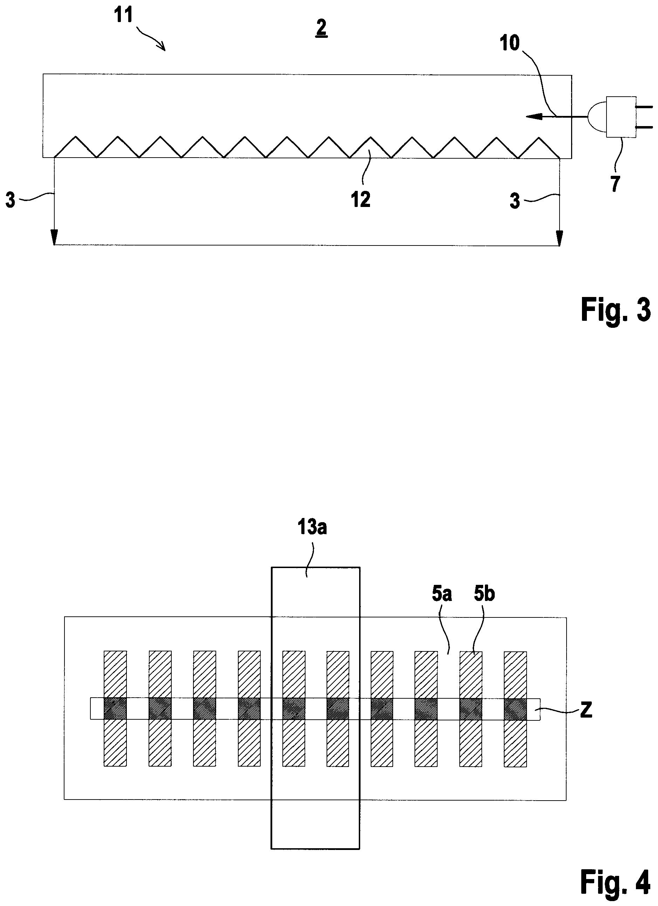

Die Figuren 2 und 3 zeigen zwei Ausführungsformen der Beleuchtungseinheit 2 für den optischen Sensor gemäß Figur 1.

Bei der Ausführungsform gemäß Figur 2 umfasst die Beleuchtungseinheit 2 ein Sensorgehäuse 6, in dem mehrere Sender 7 mit jeweils einer nachgeordneten Sendeoptik 8 vorgesehen sind. Die Sender 7 sind von Laserdioden oder Leuchtdioden gebildet und emittieren Lichtstrahlen 9 im sichtbaren oder Infrarotbereich. Die Sendeoptiken 8 sind von Zylinderlinsen oder dergleichen gebildet. Mit diesen Sendeoptiken 8 wird aus den an den Sendern 7 punktförmig abgestrahlten Lichtstrahlen 9 eine geradlinig verlaufende und kontinuierliche, das heißt ununterbrochene Lichtlinie erzeugt. Um dieser Lichtlinie bestimmte Lichtmuster aufzuprägen, sind zwischen den Sendern 7 und den Sendeoptiken 8 optische Muster 17 wie zum Beispiel Gitterstrukturen angeordnet

Die Beleuchtungseinheit 2 umfasst einen Lichtstab 11, an dessen einen längsseitigen Ende mittels eines Senders 7 Lichtstrahlen 9 eingekoppelt werden. Der Lichtstab 11 besteht aus lichtleitendem Material, so dass die Lichtstrahlen 9 in dessen Längsrichtung geführt werden. An einer Seitenfläche des Lichtstabs 11 sind über dessen gesamte Länge Auskoppelflächen 12 vorgesehen, die in Form von Aufrauungen oder Einkerbungen in dem Lichtstab 11 erzeugt werden. Dort treten die Lichtstrahlen 9 seitlich aus und bilden eine kontinuierliche, ununterbrochene Lichtlinie. Durch eine spezifische Ausbildung der Auskoppelflächen 12 können auch Lichtmuster innerhalb der Lichtlinie erzeugt werden.

Der Reflektor 5 des optischen Sensors ist als Spiegelreflektor ausgebildet und besteht, wie Figur 1 zeigt, aus einer alternierenden Folge von spiegelnd reflektierenden Segmenten 5a und lichtabsorbierenden Segmenten 5b, welche ein Reflektormuster bilden. An den spiegelnd reflektierenden Segmenten 5a wird das Licht der Lichtlinie der Beleuchtungseinheit 2 spiegelnd, das heißt gerichtet reflektiert. An den lichtabsorbierenden Segmenten 5b wird das Licht der Lichtlinie nicht oder nur in geringem Maße diffus reflektiert.

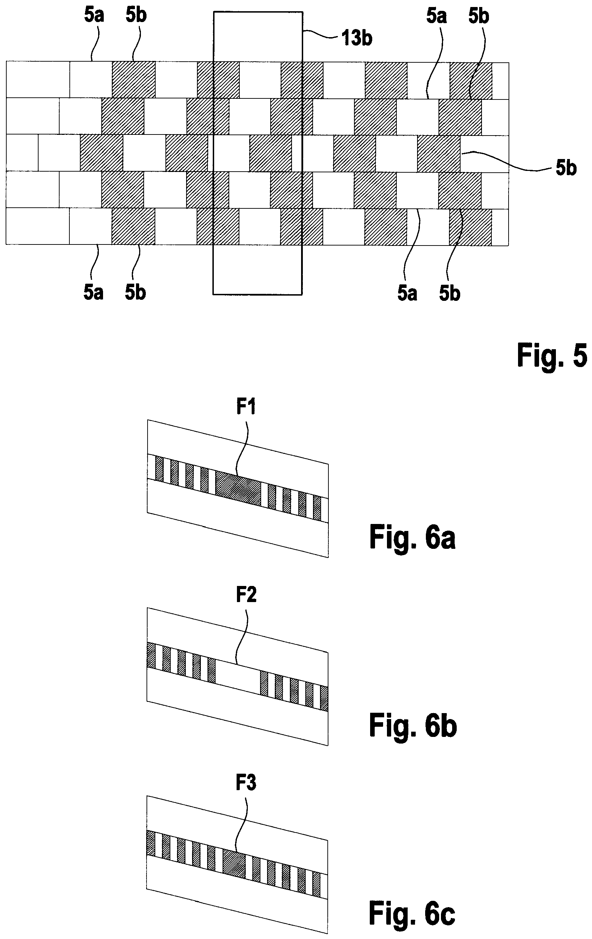

Figur 4 zeigt einen Reflektor 5 mit einem Reflektormuster, das aus einer einreihigen Anordnung von spiegelnd reflektierenden Segmenten 5a und lichtabsorbierenden Segmenten 5b. In Figur 4 ist mit Z der auf eine Zeile der matrixförmigen Kamera 4 abgebildete Bildausschnitt dargestellt. Figur 5 zeigt einen Reflektor 5 mit einem mehrzeiligen Reflexionsmuster. Jede Zeile des Reflektormusters wird selektiv auf eine oder mehrere Zeilen der Kamera 4 abgebildet, das heißt im Empfänger erfolgt eine Mehrfachzeilenauswertung zur Erfassung des Reflektormusters. Die korrespondierenden spiegelnd reflektierenden Segmente 5a beziehungsweise lichtabsorbierenden Segmente 5b sind von einer Zeile zur nächsten um einen Versatz zueinander verschoben, der jeweils kleiner ist als die Breite des spiegelnd reflektierenden Segments 5a beziehungsweise lichtabsorbierenden Segments 5b. Insgesamt bilden dabei die spiegelnd reflektierenden Segmente 5a beziehungsweise lichtabsorbierende Segmente 5b der einzelnen Zeilen V-förmige Muster, um zu schützende Objekte aus unterschiedlichen Eintrittsrichtungen im Schutzfeld zu erkennen.

Mit der Mehrfachzeilenauswertung gemäß Figur 5 können bei gleicher Ausbildung der Kamera 4 kleinere Objektstrukturen erfasst werden als bei der Einfachzeilenauswertung gemäß Figur 4. Dies ist in den Figuren 4 und 5 anhand von Abschattungsflächen 13a, 13b dargestellt. Die Abschattungsflächen 13a, 13b zeigen den Bereich der Lichtline 3, der von einem vor dem Reflektor 5 angeordneten Objekt unterbrochen wird und damit nicht mehr zum Reflektor gelangt. Die Abschattungsfläche 13a in Figur 4 entspricht der kleinsten noch mit dem einseitigen Reflektormuster erfassbaren Objektgröße, da dort gerade zwei lichtabsorbierende Segmente 5b innerhalb Abschattungsfläche 13a liegen, das heißt nicht mehr auf die Kamera 4 abgebildet werden. Wie Figur 5 zeigt, kann mit der Mehrfachzeilenauswertung und dem mehrzeiligen Reflektormuster noch kleinere Objektstrukturen der kleineren Abschattungsfläche 13b erfasst werden.

Die Figuren 1 sowie 6a bis 6c zeigen das Prinzip der Objekterfassung mit dem erfindungsgemäßen optischen Sensor. Das Schutzfeld, innerhalb dessen Objekte erfasst werden können, setzt sich zusammen aus einem Bereich A und zwei angrenzenden Bereichen B. Der Bereich A entspricht dem Sichtbereich der Kamera 4. In diesem Bereich können Objekte direkt erfasst werden. Dies zeigen die Figuren 6a und 6b. Figur 6a zeigt das Kamerabild der Kamera 4 des optischen Sensors bei der Detektion des im Bereich A angeordneten Gegenstands G1 für den Fall, dass dieser eine nicht reflektierende Fläche aufweist. In diesem Fall wird der Gegenstand G1 allein anhand der von diesem abgeschatteten Teile des Reflektormusters des Reflektors 5 erkannt, das heißt dem Bereich, innerhalb dessen die Lichtline unterbrochen ist, so dass nicht mehr alle spiegelnd reflektierende Segmente 5a des Reflektors 5 auf die Kamera 4 abgebildet werden, das heißt der Gegenstand G1 erscheint als dunkle Fläche F1 auf der Kamera 4.

Figur 6b zeigt den Fall, dass der Gegenstand G1 das Licht an Beleuchtungseinheit 2 zurück in die Kamera 4 reflektiert. Eine derartige Reflexion des Lichts in die Kamera 4 erfolgt deshalb, da sich der Gegenstand G1 innerhalb des Sichtbereichs der Kamera 4 befindet. Damit wird auf dem Kamerabild eine entsprechend helle Fläche F2 durch den Gegenstand G1 erzeugt, die gleichgroß wie die Fläche F1 ist.

Ein in einem der Bereiche B angeordneter Gegenstand G2 kann dagegen nicht durch eine Detektion des von diesem Gegenstand G2 zurückreflektierten Licht der Beleuchtungseinheit 2 erfasst werden, da sich hier der Gegenstand G2 au-ßerhalb des Sichtbereichs der Kamera 4 befindet. Jedoch bewirkt auch in diesem Fall der Gegenstand G2 unabhängig davon, ob dieser reflektierend ist oder nicht, eine Unterbrechung der Lichtlinie, so dass nicht mehr alle spiegelnd reflektierenden Segmente 5a des Reflektors 5 auf die Kamera 4 abgebildet werden. Durch die Rückreflexion des Lichts am Reflektor 5 wird diese Abschattung in den Sichtbereich der Kamera 4 gefaltet, so dass der Gegenstand G2 durch die entsprechende dunkle Fläche F3 auf dem Kamerabild erkennbar ist (Figur 6c), die bei gleicher Objektgröße durch den doppelten Abstand zur Kamera 4 halb so groß wie die Flächen F1 beziehungsweise F2 ist.

Wie Figur 1 zeigt, wird bereits mit nur einer Kamera 4 als Empfänger ein annähernd rechteckiges Schutzfeld, bestehend aus der Summe der Bereiche A und B realisiert werden.

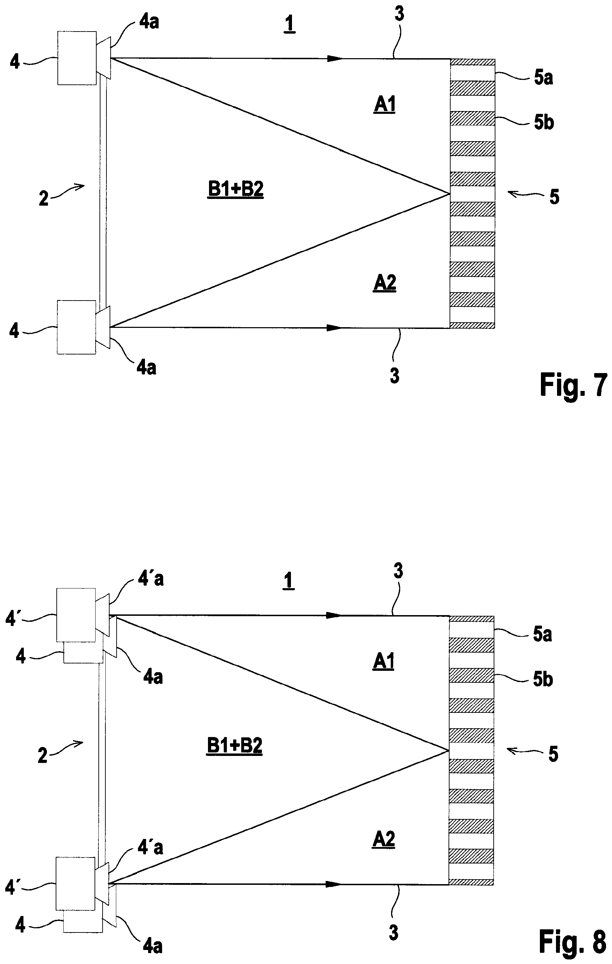

Figur 7 zeigt eine Weiterbildung des optischen Sensors gemäß Figur 1 dahingehend, dass anstelle einer Kamera 4 im Zentrum der Beleuchtungseinheit 2 nun zwei Kameras 4. 4' vorgesehen sind, wobei jeweils eine Kamera 4, 4' an einem längsseitigen Ende der Beleuchtungseinheit 2 vorgesehen ist. Ansonsten entspricht der optische Sensor 1 gemäß Figur 7 hinsichtlich Aufbau und Funktion dem optischen Sensor gemäß Figur 1.

Durch die Anordnung der Kameras 4, 4' an den Enden der Beleuchtungseinheit 2 wird ein exakt rechteckiges Schutzfeld realisiert, welches aus der Summe der Bereiche A1, A2 sowie B1 + B2 besteht. Der Bereich A1 liegt im Sichtbereich der ersten Kamera 4. Damit können mit dieser ersten Kamera 4 Objekte, die sich im Bereich A1 befinden, durch direkt von den Objekten auf diese Kamera 4 zurückreflektiertes Licht detektiert werden. Entsprechendes gilt für den Bereich A2, der im Sichtbereich der zweiten Kamera 4' liegt. Der Bereich B1 + B2 liegt außerhalb der Sichtbereiche der beiden Kameras 4, 4'. Dort angeordnete Objekte können, analog zu Objekten im Bereich B bei dem Sensor gemäß Figur 1, nur indirekt über die Abschattungen des Reflektormusters erfasst werden.

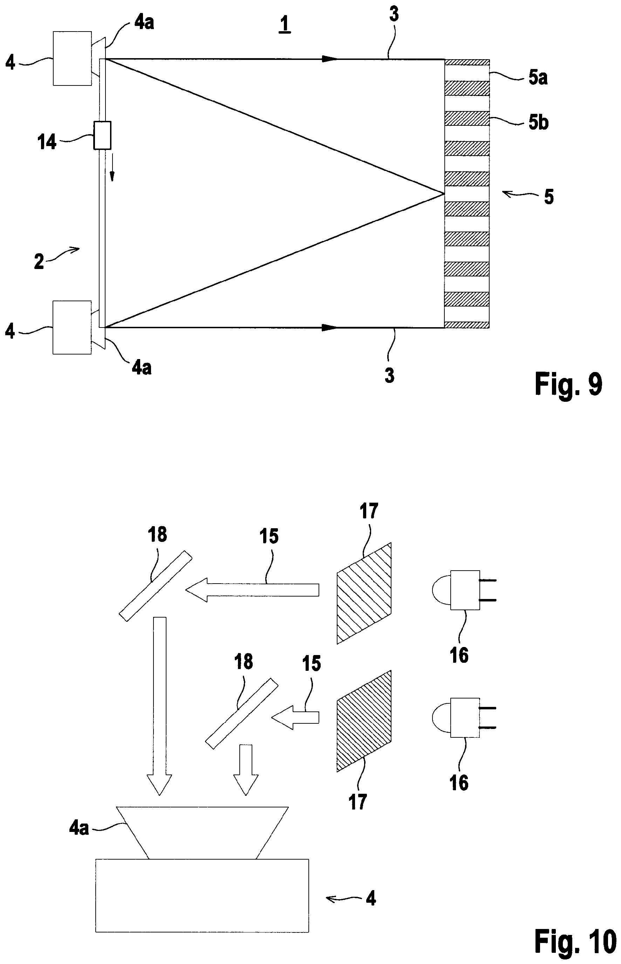

Figur 8 zeigt eine Weiterbildung der Ausführungsform gemäß Figur 7. Der optische Sensor 1 gemäß Figur 9 ist gegenüber der Ausführungsform der Figur 7 dahingehend erweitert, dass an den Enden der Beleuchtungseinheit 2 nicht nur eine Kamera 4 vorgesehen ist. Vielmehr sind dort zwei identische Kameras 4, 4' vorgesehen, mittels derer eine mehrkanalige Kamerastruktur erzielt wird. Mit den Kameras 4, 4' an jedem längsseitigen Ende der Beleuchtungseinheit 2 wird exakt dasselbe Sichtbereich erfasst. Hierzu können den Kameras 4, 4' geeignete Umlenkmittel vorgeordnet sein, mittels derer einfallendes Licht den Kameras 4, 4' in gleicher Weise zugeführt wird. Zur Fehlerkontrolle und zur Erzielung des für den Einsatz im Bereich der Sicherheitstechnik erforderlichen Sicherheitsniveaus werden die Bilder der Kameras 4, 4' oder aus den Bildern generierte Merkmale fortlaufend miteinander verglichen. Eine entsprechende mehrkanalige Kamerastruktur kann auch bei der Ausführungsform gemäß Figur 1 vorgesehen sein.

Figur 9 zeigt eine erste Ausführungsform zur Testung der Kameras 4, 4' des optischen Sensors gemäß Figur 7. Als Mittel zur Testung ist für die Beleuchtungseinheit 2 ein zyklisch über die Länge der Beleuchtungseinheit 2 durchlaufender Dunkelbereich 14 vorgesehen. Der Dunkelbereich 14 kann beispielsweise durch ein serielles Dunkelschalten von Dioden, welche die Lichtline erzeugen, generiert werden.

Durch den durchlaufenden Dunkelbereich 14 entstehen in den Kameras 4, 4' definierte, zeitlich variierende Testbilder, die mit Sollwerten zur Überprüfung der Kamera 4 in der Auswerteeinheit verglichen werden.

Figur 10 zeigt eine weitere Möglichkeit einer Testung der oder einer Kamera 4 des erfindungsgemäßen optischen Sensors. In diesem Fall werden über Testlichtstrahlen 15 emittierende Testsender 16 und nachgeordnete optische Muster 17 sowie Umlenkspiegel 18 zu vorgegebenen Zeiten Testmuster auf die Kamera 4 projiziert. Die dabei erhaltenen Kamerabilder oder aus diesen generierte Merkmale werden mit definierten Sollwerten zur Testung der Kamera 4 verglichen.

### Bezugszeichenliste

- (1): optischer Sensor
- (2): Beleuchtungseinheit
- (3): Lichtlinie
- (4): Kamera
- (4'): Kamera
- (5): Reflektor
- (5a): spiegelnd reflektierendes Segment
- (5b): lichtabsorbierendes Segment
- (6): Sensorgehäuse
- (7): Sender
- (8): Sendeoptik
- (9): Lichtstrahlen
- (10): Muster
- (11): Lichtstab
- (12): Auskoppelflächen
- (13a): Abschattungsfläche
- (13b): Abschattungsfläche
- (14): Dunkelbereich
- (15): Testlichtstrahlen
- (16): Testsender
- (17): optische Muster
- (18): Umlenkspiegel
- Gegenstand:: G1, G2
- Fläche:: F1 bis F3
- Bereich:: A, B

## Patentansprüche

1. Optischer Sensor (1) zur Erfassung von Objekten innerhalb eines Schutzfelds, mit einer eine Lichtlinie (3) erzeugenden Beleuchtungseinheit (2) und wenigstens einer der Beleuchtungseinheit (2) zugeordneten, einen Empfänger bildenden Kamera (4) an einem ersten Rand des Schutzfelds, mit einem an einem zweiten Rand des Schutzfelds angeordneten Reflektor (5), und mit einer Auswerteeinheit, in welcher in Abhängigkeit von Empfangssignalen der wenigstens einer Kamera (4) ein Objektfeststellungssignal generiert wird, **dadurch gekennzeichnet, dass** der Reflektor (5) ein Reflektormuster aus spiegelnd reflektierenden Segmenten (5a) und lichtabsorbierenden Segmenten (5b) aufweist, dass bei freiem Schutzfeld mit der Beleuchtungseinheit (2) auf dem Reflektormuster des Reflektors (5) die Lichtlinie (3) erzeugt wird und von den spiegelnd reflektierenden Segmenten (5a) das Licht der Lichtline (3) zur wenigstens einen Kamera (4) geführt wird, dass die wenigstens eine Kamera (4) mindestens einen Teil des Schutzfelds abdeckenden Sichtbereich aufweist, dass ein reflektierendes Objekt innerhalb des Sichtbereichs dadurch erfasst wird, dass an diesem reflektiertes Licht der Beleuchtungseinheit (2) direkt auf die mindestens eine Kamera (4) geführt ist, dass ein nicht reflektierendes Objekt innerhalb des Sichtbereichs dadurch erfasst wird, dass dieses die Lichtlinie (3) der Beleuchtungseinheit (2) unterbricht, so dass nicht mehr von allen spiegelnden reflektierenden Segmenten (5a) des Reflektors Licht zur mindestens einen Kamera (4) geführt wird, und dass ein reflektierendes oder nicht reflektierendes Objekt, das außerhalb des Sichtbereichs jedoch innerhalb des Schutzfelds angeordnet ist, dadurch erfasst wird, dass dieses die Lichtline (3) der Beleuchtungseinheit (2) unterbricht, so dass nicht mehr von allen spiegelnd reflektierenden Segmenten (5a) des Reflektors (5) Licht zur mindestens einen Kamera (4) geführt wird.

2. Optischer Sensor (1) nach Anspruch 1, **dadurch gekennzeichnet, dass** die eine Lichtlinie generierende Beleuchtungseinheit (2) und der Reflektor (5) ein rechteckiges Schutzfeld begrenzen.

3. Optischer Sensor (1) nach einem der Ansprüche 1 oder 2, **dadurch gekennzeichnet, dass** innerhalb des Schutzfelds angeordnete Objekte dadurch erfasst werden, dass das Reflektormuster des Reflektors (5) nicht vollständig auf den Empfänger abgebildet wird.

4. Optischer Sensor (1) nach einem der Ansprüche 1 bis 3, **dadurch gekennzeichnet, dass** bei freiem Schutzfeld die auf den Empfänger abgebildeten spiegelnd reflektierenden Segmente (5a) des Reflektors (5) als Referenzbild in einem Einlernvorgang eingelernt werden, und dass während eines auf den Einlernvorgang folgenden Arbeitsbetriebs zur Objekterfassung aktuelle Bilder des Empfängers mit dem Referenzbild oder daraus abgeleiteten Merkmalen verglichen werden.

5. Optischer Sensor (1) nach einem der Ansprüche 1 bis 4, **dadurch gekennzeichnet, dass** die Beleuchtungseinheit (2) eine kontinuierliche, ununterbrochene Lichtlinie oder eine Lichtlinie, die von mehreren aneinander gereihten Mustern gebildet ist, erzeugt.

6. Optischer Sensor (1) nach Anspruch 5, **dadurch gekennzeichnet, dass** die Beleuchtungseinheit (2) wenigstens einen Lichtstrahlen (9) emittierenden Sender (7) und einen Lichtstab (11), in welchen die Lichtstrahlen (9) eingekoppelt werden, aufweist, wobei im Lichtstab (11) geführte Lichtstrahlen (9) über seitliche Auskoppelflächen (12) des Lichtstabs (11) zur Generierung der Lichtlinie ausgekoppelt werden.

7. Optischer Sensor (1) nach Anspruch 5, **dadurch gekennzeichnet, dass** die Beleuchtungseinheit (2) wenigstens einen Lichtstrahlen (9) emittierenden Sender (7) und eine diesem nachgeordnete Sendeoptik (8) aufweist, mittels derer aus den Lichtstrahlen (9) die Lichtlinie geformt wird.

8. Optischer Sensor (1) nach einem der Ansprüche 1 bis 7, **dadurch gekennzeichnet, dass** der Reflektor (5) eine Spiegelfläche aufweist, welche an vorgegebenen Positionen zur Generierung des Reflektormusters lichtabsorbierende Beschichtungen oder Aussparungen aufweist.

9. Optischer Sensor (1) nach einem der Ansprüche 1 bis 8, **dadurch gekennzeichnet, dass** im Empfänger eine mehrzeilige Erfassung des Reflektormusters erfolgt

10. Optischer Sensor (1) nach einem der Ansprüche 1 bis 9, **dadurch gekennzeichnet, dass** der Reflektor (5) ein mehrzeiliges Reflektormuster aufweist.

11. Optischer Sensor (1) nach einem der Ansprüche 1 bis 10, **dadurch gekennzeichnet, dass** die oder jede Kamera (4) eine matrixförmige Anordnung von Empfangselementen aufweist.

12. Optischer Sensor (1) nach einem der Ansprüche 1 bis 11, **dadurch gekennzeichnet, dass** dieser ein Sicherheitssensor ist, dessen Auswerteeinheit und/oder dessen Empfänger einen mehrkanaligen Aufbau aufweist.

13. Optischer Sensor (1) nach einem der Ansprüche 1 bis 12, **dadurch gekennzeichnet, dass** Mittel zur Testung der wenigstens einen Kamera (4) vorgesehen sind.

14. Optischer Sensor (1) nach Anspruch 13, **dadurch gekennzeichnet, dass** zur Testung der wenigstens einen Kamera (4) mit dieser aufgenommene Bilder bei ausgeschalteten Sendern (7) oder bei Projektion eines Lichtmusters in den Sichtbereich der Kamera (4) oder bei Erzeugung eines der Lichtlinie aufgeprägten, sich zeitlich ändernden Testmusters in der Auswerteeinheit ausgewertet werden.

15. Optischer Sensor (1) nach einem der Ansprüche 1 bis 14, **dadurch gekennzeichnet, dass** dieser Mittel zur Unterdrückung von Störlichteinstrahlungen aufweist.

## Claims

1. Optical sensor (1) for detecting objects within a protection field, comprising an illuminating unit (2) producing a line of light (3) and at least one camera (4), which is associated with the illuminating unit (2) and forms a receiver, at a first edge of the protection field, a reflector (5) arranged at a second edge of the protection field and an evaluating unit in which an object detection signal is generated in dependence on received signals of the at least one camera (4), **characterised in that** the reflector (5) has a reflector pattern of mirroring reflective segments (5a) and light-absorbing segments (5b), that when the protection field is free the line of light (3) is produced by the illuminating unit (2) on the reflector pattern of the reflector (5) and the light of the line of light (3) is conducted to the at least one camera (4) by the mirroring reflective segments (5a), that the at least one camera (4) has a viewing range covering at least a part of the protection field, that a reflective object within the viewing range is detected by light of the illuminating unit (2) reflected at the object being conducted directly to the at least one camera (4), that a non-reflective object within the viewing range is detected by the line of light (3) of the illuminating unit (2) being interrupted by this object so that light is no longer conducted to the at least one camera (4) from all mirroring reflective segments (5a) of the reflector, and that a reflective or non-reflective object arranged outside the viewing range, but within the protection field, is detected by the line of light (3) of the illuminating unit (2) being interrupted by this object so that light is no longer conducted to the at least one camera (4) from all mirroring reflective segments (5a) of the reflector (5).

2. Optical sensor (1) according to claim 1, **characterised in that** the illuminating unit (2) generating a line of light and the reflector (5) bound a rectangular protection field.

3. Optical sensor (1) according to one of claims 1 and 2, **characterised in that** objects arranged within the protection field are detected **in that** the reflector pattern of the reflector (5) is incompletely imaged on the receiver.

4. Optical sensor (1) according to any one of claims 1 to 3, **characterised in that** when the protection field is free the mirroring reflective segments (5a) of the reflector (5) imaged on the receiver are learnt as a reference image in a learning process and that during a work operation, which follows the learning process, for object detection current images of the receiver are compared with the reference image or features derived therefrom.

5. Optical sensor (1) according to any one of claims 1 to 4, **characterised in that** the illuminating unit (2) produces a continuous uninterrupted line of light or a line of light formed by several patterns arranged in a row.

6. Optical sensor (1) according to claim 5, **characterised in that** the illuminating unit (2) comprises at least one transmitter (7) emitting light beams (9) and a light rod (11) into which the light beams (9) are coupled, wherein light beams (9) conducted into the light rod (11) are decoupled therefrom by way of lateral decoupling surfaces (12) of the light rod (11) for generating the line of light.

7. Optical sensor (1) according to claim 5, **characterised in that** the illuminating unit (2) comprises at least one transmitter (7) emitting light beams (9) and a transmitting optical system (8) which is arranged downstream thereof and by means of which the line of light is formed from the light beams.

8. Optical sensor (1) according to any one of claims 1 to 7, **characterised in that** the reflector (5) has a mirror surface which at predetermined positions has light-absorbing coatings or recesses for generating the reflector pattern.

9. Optical sensor (1) according to any one of claims 1 to 8, **characterised in that** a multi-line detection of the reflector pattern is carried out in the receiver.

10. Optical sensor (1) according to any one of claims 1 to 9, **characterised in that** the reflector (5) has a multi-line reflector pattern.

11. Optical sensor (1) according to any one of claims 1 to 10, **characterised in that** the or each camera (4) has a matrix-like arrangement of receiving elements.

12. Optical sensor (1) according to any one of claims 1 to 11, **characterised in that** this is a security sensor, the evaluating unit and/or receiver of which has or have a multi-channel construction.

13. Optical sensor (1) according to any one of claims 1 to 12, **characterised in that** means for testing the at least one camera (4) are provided.

14. Optical sensor (1) according to claim 13, **characterised in that** for resting the at least one camera (4) images taken by this are evaluated in the evaluating unit with transmitters (7) switched off or with projection of a light pattern into the viewing range of the camera (4) or with generation of a time-variable test pattern imposed on the line of light.

15. Optical sensor (1) according to any one of claims 1 to 14, **characterised in that** this comprises means for suppression of inward radiation of interference light.

## Revendications

1. Capteur optique (1) pour détecter des objets à l'intérieur d'un champ de protection, avec une unité d'éclairage (2) produisant une ligne lumineuse (3) et au moins une caméra (4) associée à l'unité d'éclairage (2), formant un récepteur à un premier bord du champ de protection, avec un réflecteur (5) disposé à un deuxième bord du champ de protection, et avec une unité d'évaluation dans laquelle un signal de détection d'objet est généré en fonction de signaux de réception de ladite au moins une caméra (4), **caractérisé en ce que** le réflecteur (5) présente un motif de réflecteur composé de segments réfléchissant de manière spéculaire (5a) et de segments absorbant la lumière (5b), que lorsque le champ de protection est libre la ligne lumineuse (3) est produite par l'unité d'éclairage (2) sur le motif de réflecteur du réflecteur (5) et la lumière de la ligne lumineuse (3) est guidée par les segments réfléchissant de manière spéculaire (5a) vers ladite au moins une caméra (4), que ladite au moins une caméra (4) présente un champ de vision couvrant au moins une partie du champ de protection, qu'un objet réfléchissant à l'intérieur du champ de vision est détecté par le fait que la lumière de l'unité d'éclairage (2) réfléchie sur celui-ci est guidée directement sur ladite au moins une caméra (4), qu'un objet non réfléchissant à l'intérieur du champ de vision est détecté par le fait que celui-ci interrompt la ligne lumineuse (3) de l'unité d'éclairage (2), de sorte que la lumière n'est plus guidée par tous les segments réfléchissant de manière spéculaire (5a) du réflecteur vers ladite au moins une caméra (4), et qu'un objet réfléchissant ou non réfléchissant qui est disposé à l'extérieur du champ de vision mais à l'intérieur du champ de protection est détecté par le fait que celui-ci interrompt la ligne lumineuse (3) de l'unité d'éclairage (2), de sorte que la lumière n'est plus guidée par tous les segments réfléchissant de manière spéculaire (5a) du réflecteur (5) vers ladite au moins une caméra (4).

2. Capteur optique (1) selon la revendication 1, **caractérisé en ce que** l'unité d'éclairage (2) générant une ligne lumineuse et le réflecteur (5) délimitent un champ de protection rectangulaire.

3. Capteur optique (1) selon l'une des revendications 1 ou 2, **caractérisé en ce que** des objets disposés à l'intérieur du champ de protection sont détectés par le fait que le motif de réflecteur du réflecteur (5) n'est pas complètement reproduit sur le récepteur.

4. Capteur optique (1) selon l'une des revendications 1 à 3, **caractérisé en ce que** lorsque le champ de protection est libre, les segments réfléchissant de manière spéculaire (5a) du réflecteur (5) reproduits sur le récepteur sont appris en tant qu'image de référence dans une phase d'apprentissage, et que pendant un fonctionnement opérationnel de détection d'objet faisant suite à la phase d'apprentissage, les images actuelles du récepteur sont comparées à l'image de référence ou à des caractéristiques qui en sont dérivées.

5. Capteur optique (1) selon l'une des revendications 1 à 4, **caractérisé en ce que** l'unité d'éclairage (2) produit une ligne lumineuse continue, ininterrompue ou une ligne lumineuse qui est formée de plusieurs motifs juxtaposés.

6. Capteur optique (1) selon la revendication 5, **caractérisé en ce que** l'unité d'éclairage (2) présente au moins un émetteur (7) émettant des rayons lumineux (9) et une barre lumineuse (11) dans laquelle les rayons lumineux (9) sont couplés, les rayons lumineux (9) guidés dans la barre lumineuse (11) étant découplés par des surfaces de découplage latérales (12) de la barre lumineuse (11) pour générer la ligne lumineuse.

7. Capteur optique (1) selon la revendication 5, **caractérisé en ce que** l'unité d'éclairage (2) présente au moins un émetteur (7) émettant des rayons lumineux (9) et une optique d'émission (8) disposée à la suite de celui-ci, au moyen de laquelle la ligne lumineuse est formée à partir des rayons lumineux (9).

8. Capteur optique (1) selon l'une des revendications 1 à 7, **caractérisé en ce que** le réflecteur (5) présente une surface réfléchissante qui présente des revêtements absorbant la lumière ou des évidements à des positions prédéfinies pour générer le motif de réflecteur.

9. Capteur optique (1) selon l'une des revendications 1 à 8, **caractérisé en ce qu'**une détection multiligne du motif de réflecteur a lieu dans le récepteur.

10. Capteur optique (1) selon l'une des revendications 1 à 9, **caractérisé en ce que** le réflecteur (5) présente un motif de réflecteur multiligne.

11. Capteur optique (1) selon l'une des revendications 1 à 10, **caractérisé en ce que** la ou chaque caméra (4) présente une disposition matricielle d'éléments de réception.

12. Capteur optique (1) selon l'une des revendications 1 à 11, **caractérisé en ce que** celui-ci est un capteur de sécurité dont l'unité d'évaluation et/ou dont le récepteur présente une structure multicanal.

13. Capteur optique (1) selon l'une des revendications 1 à 12, **caractérisé en ce que** des moyens pour tester ladite au moins une caméra (4) sont prévus.

14. Capteur optique (1) selon la revendication 13, **caractérisé en ce que** pour tester ladite au moins une caméra (4), des images prises avec elle avec les émetteurs (7) désactivés ou en projetant un motif lumineux dans le champ de vision de la caméra (4) ou en générant un motif de test variable dans le temps, appliqué à la ligne lumineuse, sont évaluées dans l'unité d'évaluation.

15. Capteur optique (1) selon l'une des revendications 1 à 14, **caractérisé en ce que** celui-ci présente des moyens pour empêcher les entrées de lumière parasite.
